# EUROPÄISCHE PATENTANMELDUNG

(11) **EP 2 754 575 A2**
(43) Veröffentlichungstag der Anmeldung: **16.07.2014**
(21) Anmeldenummer: 14150743.4
(22) Anmeldetag: 10.01.2014
(51) Int. Cl.: B60G 17/052, B60G 17/015, B60G 17/056

(54) **Luftfederanlage und Ventil für ein Fahrzeug**

(30) Priorität: 11.01.2013 DE 102013100295
(71) Anmelder: Gudzulic, Miro, 83512 Wasserburg (DE)
(72) Erfinder: Gudzulic, Miro, 83512 Wasserburg (DE)
(74) Vertreter: Hofstetter, Schurack & Partner

(57) **Zusammenfassung**

Die Erfindung betrifft eine Luftfederanlage für ein Fahrzeug, insbesondere einen Anhänger, Sattelauflieger oder dgl., mit zumindest einer Luftfedereinrichtung (52) für eine Liftachse (LA), welche mittels einer pneumatisch betätigbaren Lifteinrichtung (L) anhebbar bzw. absenkbar ist, wobei die Luftfedereinrichtung (52) ein über eine Druckluftleitung (62) mit der Lifteinrichtung (L) verbundenes Ventil (68) umfasst, welches in Abhängigkeit eines in der Lifteinrichtung (L) vorherrschenden Luftdrucks schaltbar ist. Des Weiteren betrifft die Erfindung Elektrisch schaltbares Ventil (56) für eine Luftfederanlage eines Fahrzeugs, insbesondere eines Anhängers, Sattelaufliegers oder dgl., mit einem elektrischen Betätigungselement (112), mittels welchem ein Kolben (104) zwischen einer Schließstellung und wenigstens einer Offenstellung betätigbar ist, wobei das Ventil (56) wenigstens einen Steueranschluss (110) für eine Druckluftleitung (58) aufweist, über welchen der Kolben (104) in Abhängigkeit eines in der Druckluftleitung (58) vorherrschenden Luftdrucks schaltbar ist.

## Beschreibung

Die Erfindung betrifft eine Luftfederanlage für ein Fahrzeug, insbesondere einen Anhänger, Sattelauflieger oder dergleichen, gemäß den Oberbegriffen der Patentansprüche 1 bzw. 2. Des Weiteren betrifft die Erfindung ein Ventil für eine derartige Luftfederanlage gemäß den Oberbegriffen der Patentansprüche 4, 6 und 7.

Eine derartige Luftfederanlage ist beispielsweise bereits aus der DE 10 2008 051 546 A1 als bekannt zu entnehmen. Üblicherweise weisen derartige Luftfederanlagen insbesondere bei größeren Fahrzeugen zumindest eine über eine zugehörige Luftfedereinrichtung abgestützte Liftachse auf, welche mittels einer pneumatisch betätigbaren Lifteinrichtung mittels eines Liftbalgs anhebbar bzw. absenkbar ist. Die Luftfedereinrichtung der Liftachse umfasst üblicherweise zwei Luftfedern, welche über ein zugehöriges Ventil be- bzw. entlüftet werden können. Zum Entlüften wird dieses Ventil der Luftfedereinrichtung in der Liftachse üblicherweise permanent bestromt, was eine erhebliche Energieverschwendung darstellt. Um darüber hinaus die Luftfedern der Luftfedereinrichtung der Liftachse in entlüftetem Zustand vor mechanischen Beschädigungen zu schützen, werden üblicherweise externe Druckregler eingebaut. Damit wird erreicht, dass ein minimaler Druck in der Luftfeder vorhanden bleibt. Die Druckregler werden überdies auch eingesetzt, um eine zu hohe Druckbelastung der Luftfedern zu vermeiden. Insgesamt ist dieser Aufbau jedoch relativ aufwendig und teuer.

Des Weiteren umfassen derartige Luftfederanlagen üblicherweise zumindest eine Luftfedereinrichtung für eine Tragachse, welche mit einer pneumatischen Hebe- und Senkeinrichtung angehoben bzw. abgesenkt werden kann. Der Luftfedereinrichtung sind dabei üblicherweise jeweilige, elektrisch betätigbare Schaltventile zugeordnet. Problematisch bei derartigen Schaltventilen ist es, dass diese permanent bestromt werden müssen. Dies ist insbesondere dann schlecht, wenn es sich um die Tragachsen eines Anhängers, Sattelaufliegers oder dergleichen handelt. Dann muss nämlich eine separate Batterie am Anhänger bzw. Sattelauflieger vorgesehen werden, wenn auch bei abgestelltem Fahrzeug ein Heben oder Senken möglich sein soll. Dies jedoch auf gerade unerwünscht.

Aufgabe der vorliegenden Erfindung ist es daher, eine Luftfederanlage bzw. ein Ventil der eingangs genannten Art zu schaffen, mittels welcher sich eine günstigere Steuerung der jeweiligen Luftfederanlage - insbesondere auch ohne elektrische Stromversorgung - realisieren lässt.

Diese Aufgabe wird erfindungsgemäß durch eine Luftfederanlage mit den Merkmalen der Patentansprüche 1 bzw. 2 sowie durch ein Ventil mit den Merkmalen der Patentansprüche 4, 5 bzw. 7 erreicht. Vorteilhafte Ausgestaltungen mit zweckmäßigen und nicht-trivialen Weiterbildungen der Erfindung sind in den abhängigen Patentansprüchen angegeben.

Um eine Luftfederanlage gemäß Patentanspruch 1 zu schaffen, welche besonders günstig gesteuert werden kann, ist es erfindungsgemäß vorgesehen, dass die Luftfedereinrichtung ein über eine Druckluftleitung mit der Lifteinrichtung verbundenes Ventil umfasst, welches in Abhängigkeit eines in der Lifteinrichtung vorherrschenden Luftdrucks schaltbar ist. Mit anderen Worten ist erfindungsgemäß eine Anlage geschaffen, bei welcher die Luftfedern der Luftfedereinrichtung der Liftachse automatisch durch Schalten des entsprechenden Ventils entlüftet werden, wenn in der Lifteinrichtung, welche zum Heben der Liftachse benutzt wird, ein entsprechender Luftdruck vorherrscht. Wird demzufolge beispielsweise ein zugehöriger Liftbalg unter einen vorbestimmten Luftdruck gesetzt und demzufolge die Liftachse angehoben, so wird automatisch - infolge des vorherrschenden Luftdrucks - das entsprechende Ventil der Luftfedereinrichtung geschaltet, sodass die Luftfedern der Luftfedereinrichtung der Liftachse entsprechend entlüftet werden. Wird umgekehrt der Luftdruck im Liftbalg der Lifteinrichtung abgesenkt, um ein Absenken der Liftachse zu erreichen, so wird automatisch - in Abhängigkeit des dann sich reduzierenden Luftdrucks - das entsprechende Ventil in eine dazu gehörige Schaltstellung gebracht, sodass dann durch entsprechende Druckbeaufschlagung die zugehörigen Luftfedern der Luftfedereinrichtung der Liftachse wieder befüllt werden können, und die Liftachse wieder als normale Tragachse zur Verfügung steht.

Die Luftfederanlage gemäß Patentanspruch 2 umfasst zumindest eine Luftfedereinrichtung für eine zugehörige Tragachse, welche wenigstens zwei Ventile für jeweils zugehörige Luftfedern umfasst. Außerdem ist eine pneumatische Hebe- und Senkeinrichtung zum Schalten wenigstens eines Hauptventils und wenigstens zweier Ventile der Luftfedereinrichtung vorgesehen, wobei diese als über eine Luftfedersteuerung elektrisch schaltbare Ventile ausgebildet sind. Mittels der Hebe- und Senkeinrichtung sind dieses beiden Ventile zur jeweiligen Schaltbetätigung über eine jeweilige Druckluftleitung verbunden. Hierdurch können die jeweiligen Ventile und somit auch zugehörige Luftfedern der Luftfedereinrichtung der jeweiligen Tragachse betätigt werden, ohne dass hierfür ein elektrischer Schaltimpuls erforderlich ist. Dies ist insbesondere dann vorteilhaft, wenn es sich bei dem Fahrzeug um einen Anhänger, Sattelauflieger oder dergleichen handelt. Somit muss in einem Fahrzeug keine Batterie oder dergleichen mitgeführt werden, um die an sich auf elektrischem Weg zu schaltenden Ventile für den Hebe- und Senkvorgang auch mittels von Druckluft schalten zu können.

Um darüber hinaus ein elektrisch schaltbares Ventil gemäß Patentanspruch 4 zu schaffen, welches nicht nur mit einem elektrischen Betätigungselement zwischen einer Schließstellung und einer Offenstellung zu schalten ist, sondern überdies auch per Druckluft, umfasst das Ventil wenigstens einen Steueranschluss für eine Druckluftleitung, über welchen der Kolben in Abhängigkeit eines in der Druckluftleitung vorherrschenden Luftdrucks schaltbar ist. Somit ist auf einfache Weise ein an sich elektrisch schaltbares Ventil geschaffen, welches im Bedarfsfall - beispielsweise in Abwesenheit einer elektrischen Stromquelle - auch pneumatisch geschalten werden kann.

Um außerdem ein elektrisch schaltbares Ventil gemäß Patentanspruch 6 zu schaffen, dessen elektrisches Betätigungselement besonders große Hübe zulässt und dennoch zur feinen Einstellung der jeweiligen Höhe der Luftfederanlage fein dosiert werden kann, ist es erfindungsgemäß vorgesehen, dass dieses elektrische Betätigungselement als Linearschrittmotor ausgebildet ist.

Schließlich ist es bei einem Ventil gemäß Patentanspruch 7 vorgesehen, neben zumindest zwei Anschlüssen zum Steuern von Druckluft mindestens einen weiteren Anschluss für ein Unterdruckventil vorzusehen, über welches beim Ablassen von Druckluft aus der zugeordneten Luftfeder der Luftfedereinrichtung der Liftachse ein Restdruck einstellbar ist. Somit wird mit einem derartigen Ventil zum Entlüften der jeweiligen Luftfeder erreicht, dass in dieser eine Restmenge an Luft eines bestimmten Luftdrucks verbleibt, sodass der Verschleiß dieser Luftfeder auf einfache Weise reduziert werden kann.

Weitere Vorteile, Merkmale und Einzelheiten der Erfindung ergeben sich aus der nachfolgenden Beschreibung, Ausführungsbeispiele sowie anhand der Zeichnungen; diese zeigen in:
- Fig. 1: einen Schaltplan einer Luftfederanlage für ein Fahrzeug in Form eines Sattelaufliegers mit zwei Tragachsen mit zugehörigen Luftfedereinrichtungen, welche über eine Hebe- und Senkeinrichtung anhebbar bzw. absenkbar sind, und mit einer Liftachse, welche mittels einer pneumatischen Lifteinrichtung anhebbar bzw. absenkbar ist;
- Fig. 2: einen Schaltplan einer Luftfederanlage für ein Fahrzeug in Form eines Sattelaufliegers in einer zur Fig. 1 alternativen Ausgestaltung, welches eine Tragachse und eine Liftachse umfasst, deren jeweilige Luftfedern links und rechts separat steuerbar sind;
- Fig. 3a, 3b: jeweilige ausschnittsweise dargestellte Schaltpläne der Luftfederanlagen gemäß den Fig. 1 und 2 im Bereich der jeweiligen Hebe- und Senkeinrichtung deren zugehörigen Tragachsen;
- Fig. 4a, 4b: jeweils eine Schnittansicht durch ein pneumatisch betätigbares Ventil der Luftfedereinrichtung der Liftachse der Luftfederanlage gemäß den Fig. 1 bzw. 2, wobei jeweilige, um 90° zueinander gedrehte Längsschnitte des Ventils dargestellt sind;
- Fig. 5: eine Schnittansicht durch ein elektrisch schaltbares Ventil, welches im vorliegenden Fall oberseitig an einer zugehörigen Luftfeder befestigt ist und außerdem einen Steueranschluss für eine Druckluftleitung aufweist, über welche der der Kolben des Ventils in Abhängigkeit für eines in der Druckluftleitung vorherrschenden Luftdruck schaltbar ist;
- Fig. 6: eine schematische Schnittansicht eines weiteren, oberhalb einer zugehörigen Luftfeder befestigten elektrisch schaltbaren Ventils, bei welchem das elektrische Betätigungselement des Kolbens als Linearschrittmotor ausgebildet ist, wobei außerdem wiederum eine Druckluftleitung an einem Steueranschluss des Ventils vorgesehen ist, mittels welchem der Kolben in Abhängigkeit eines in der Druckluftleitung vorherrschenden Luftdrucks schaltbar ist; und in
- Fig. 7: ein Diagramm zu dem Ventil gemäß Fig. 6, wobei auf der y-Achse jeweils verstellbare Höhe der Luftfeder gedeutet ist und auf der x-Achse hierzu relative Durchflussmenge an Luft durch das entsprechende Ventil.

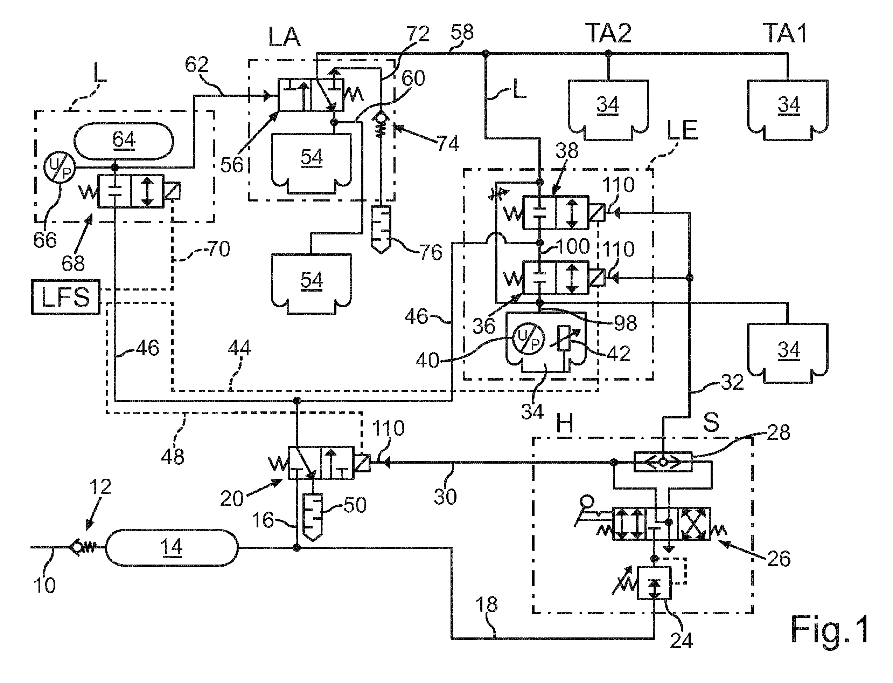

In Fig. 1 ist ein Schaltplan einer Luftfederanlage für ein Fahrzeug in Form eines Sattelaufliegers dargestellt. Prinzipiell eignen sich die Luftfederanlagen auch für andere Arten von Fahrzeugen, also beispielsweise Anhänger, Trailer oder aber auch für Kraftwagen selbst.

Im vorliegenden Fall umfasst der Sattelauflieger zwei Tragachsen TA1 und TA2 sowie eine Liftachse LA, welche im Bedarfsfall mittels einer im Weiteren noch näher erläuterten Lifteinrichtung L angehoben bzw. abgesenkt werden kann, sodass deren Räder entsprechend Kontakt zur Fahrbahn haben oder nicht. Die gesamte Luftfederanlage ist über eine Luftfedersteuerung LFS auf noch näher beschriebene weitere Weise steuerbar.

Die gesamte Luftfederanlage wird über eine Leitung 10 mittels eines nicht weiter dargestellten Kompressors mit Druckluft versorgt, welche nach passieren eines Rückschlagventils 12 in einem Druckluftspeicher 14 gespeichert wird. Nach dem Druckluftspeicher 14 zweigen zwei Leitungen 16, 18 ab, wobei über die Leitung 16 ein Hauptventil 20 über die Leitung 18 eine Hebe- und Senkeinrichtung 22 mit Luft beaufschlagbar ist.

Die Hebe- und Senkeinrichtung 22 umfasst einen Druckminderer 24 sowie ein Handventil 26, welches als 4/3-Wegeventil ausgebildet ist. Schließlich umfasst die Hebe- und Senkeinrichtung 22 ein Oder-Ventil 28, dessen Funktion ebenfalls noch näher erläutert wird. Von der Hebe- und Senkeinrichtung 22 führt eine Leitung 30 zum Hauptventil 20 und eine Leitung 32 zu den Tragachsen TA1 und TA2.

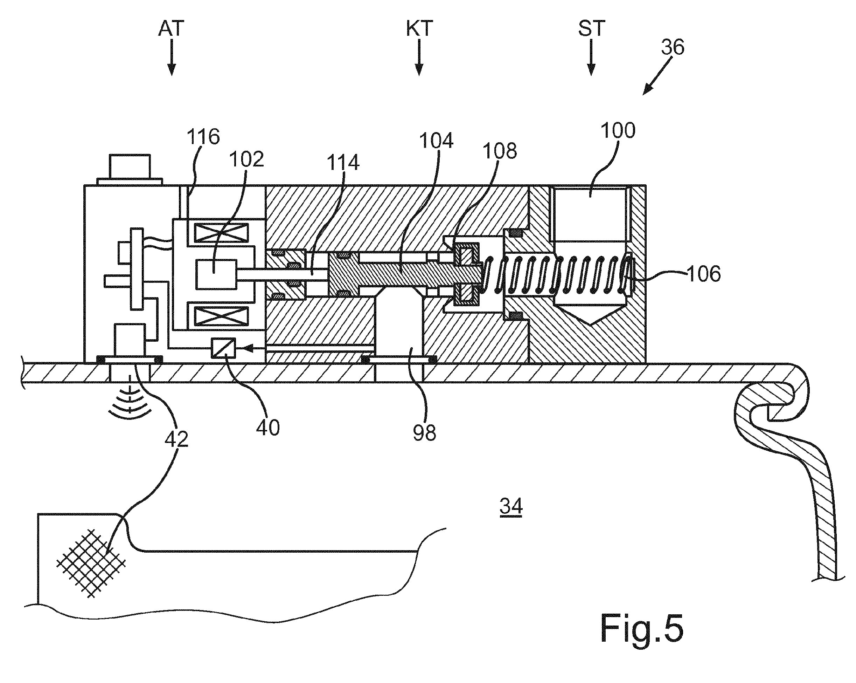

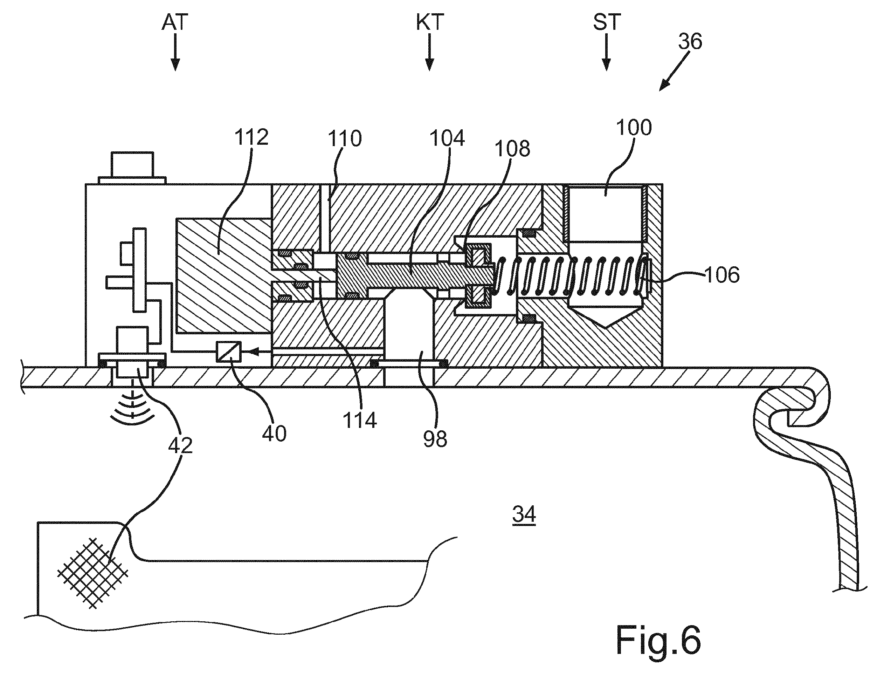

Die Tragachsen TA1 und TA2 umfassen jeweilige Luftfedern 34, welche im vorlegenden Fall durch zwei Halteventile 36, 38 in Verbindung stehen. Je nach Anordnung der Halteventile 36, 38 ist es denkbar, eine Trennung zur separaten Be- bzw. Entlüftung der Luftfedern 34 der vorderen und der hinteren Tragachse TA1 bzw. TA2 oder der linken und der rechten Seite vorzunehmen. Gegebenenfalls wäre es auch denkbar, alle Luftfedern separat anzusteuern. Bei den Halteventilen 36, 38 handelt es sich im vorliegenden Fall um jeweilige, elektrisch schaltbare 2/2-Wegeventile, welche jedoch außerdem zur jeweiligen Schaltbetätigung einen Anschluss für die Druckluftleitung 32 aufweisen. Auf die genaue Ausgestaltung eines derartigen, elektrisch schaltbaren Ventils wird im Zusammenhang mit den Fig. 5 und 6 noch näher eingegangen werden. Wenigstens eine in der Luftfedern 34 ist vorliegend mit einem Sensor 40 bzw. einem Höhensensor 42 verbunden, welche vorzugsweise in das zugehörige Halteventil 36 bzw. 38 integriert sind. Auch bezüglich dieser Ausgestaltung wird auf die Fig. 5 bzw. 6 verwiesen.

Die beiden Halteventile 36, 38 sowie jeweils die beiden Luftfedern der Tragachsen TA1 und TA2 bilden somit eine Luftfedereinrichtung LE, welche auf folgende Weise steuerbar ist:

Im Normalbetrieb des Sattelaufliegers, in der diese an der zugehörigen Sattelzugmaschine samt Stromversorgung angekoppelt ist, erfolgt die Steuerung über die Luftfedersteuerung LFS. Diese kann entweder in der Zugmaschine oder im Sattelauflieger integriert sein. Soll nun eine Höhenanpassung der Luftfedern 34 erfolgen, so werden die beiden Halteventile 36, 38 in bekannter Weise über eine Steuerleitung 44 angesteuert, wobei über das Halteventil 36 die eine Fahrzeugseite und über das Halteventil 38 die andere Fahrzeugseite anhebbar bzw. absenkbar ist. Die Luftversorgung der Luftfedern 34 erfolgt dabei über eine Druckluftleitung 46, welche durch entsprechendes Ansteuern des Hauptventils 20 über eine Steuerleitung 48 mit Druck beaufschlagbar ist.

Insbesondere außerhalb des Fahrbetriebs, also wenn entsprechende Stromversorgung der Luftfederanlage bzw. der Luftfedersteuerung LFS vorliegt, soll das Fahrzeug über die Tragachsen TA1 und TA2 mittels der Hebe- und Senkeinrichtung 22 auch dann betätigbar sein, wenn keine Stromversorgung vorliegt. Die Hebe- und Senkeinrichtung 22 wird demzufolge über den vollen Druckluftspeicher 14 mit entsprechender Druckluft versorgt. In der in Fig. 1 gezeigten Ausgangsstellung ist dabei das Handventil 26 in einer mittleren Halteposition dargestellt. Aus dieser Halteposition kann das Handventil 26 in Richtung nach rechts gedrückt werden, um die Hebefunktion H zu erreichen. Hierdurch gelangt Druckluft über die Druckluftleitung 18 durch das Handventil 26 und über das Oder-Ventil 28 zur Druckluftleitung 32. Über diese Druckluftleitung 32 werden die beiden Halteventile 36, 38 aus ihrer jeweiligen Schließstellung in ihre jeweilige Offenstellung betätigt. Über die Leitung 30 wird in gleicher Weise das Hauptventil 20 geschaltet, sodass Druckluft durch die Druckluftleitung 16 zur Druckluftleitung 46 gelangt. Über die geschalteten Halteventile 36, 38 gelangt die Druckluft zu den jeweiligen Luftfedern 34, sodass diese mit Druckluft befüllt und der Sattelauflieger im Bereich seiner Tragachsen TA1 undTA2 angehoben wird.

Umgekehrt wird bei der Senkfunktion der Hebe- und Senkeinrichtung 22 das Handventil 26 in Richtung nach links bewegt, wobei Druckluft abermals aus der Druckluftleitung 18 über das Handventil 26 und das Oder-Ventil 28 zur Leitung 32 gelangt und hierdurch die beiden Halteventile 36, 38 geschalten werden. Im Unterschied zur Hebefunktion H gelangt jedoch keine Druckluft zur Leitung 30, sodass das Hauptventil 20 in der in Fig. 1 gezeigten, ungeschalteten Stellung verbleibt. Durch das Schalten der Halteventile 36, 38 gelangt somit Druckluft aus den Luftfedern 34 heraus und über die Leitung 46 zum Hauptventil 20, wo die Luft über einen Schalldämpfer 50 ins Freie entweichen kann. Somit wird ein gleichmäßiges Absenken des Fahrzeugs im Bereich seiner beiden Tragachsen TA1 und TA2 erreicht.

Über eine geeignete Ansteuerung einer entsprechenden Anzahl von Halteventilen 36, 38 ist es dabei - wie vorstehend bereits erläutert - auch möglich, eine Trennung der linken bzw. rechten Fahrzeugseite bzw. der vorderen und hinteren Tragachse TA1, TA2 zu erreichen, um beispielsweise Luft nur einer Fahrzeugseite zuzuführen bzw. aus dieser abzulassen.

Die Liftachse LA ist über eine Luftfedereinrichtung 52 abgestützt, welche vorliegend zwei Luftfedern 54 umfasst. Die beiden Luftfedern 54 sind vorliegend über ein gemeinsames Ventil 56 steuerbar, welches als 3/2-Wegeventil gebildet ist. Eine Druckluftleitung 58 versorgt die Luftfedern 54 mit Luft. Diese Druckluftleitung 58 ist unter Vermittlung des Halteventils 38 mit der Leitung 46 und unter Vermittlung des Hauptventils 20 mit dem Druckluftspeicher 14 verbunden. Über eine jeweilige Leitung 60 sind die beiden Luftfedern 54 mit dem Ventil 56 verbunden. Schaltbar ist das Ventil 56 über eine zusätzliche Druckluftleitung 62, welche mit der im weiter noch näher erläuterten Lifteinrichtung L verbunden ist.

Die Lifteinrichtung L dient dazu, die Liftachse LA bei Nichtgebrauch anzuheben bzw. bei Gebrauch abzusenken. Zunächst umfasst die Lifteinrichtung L hierzu einen Luftbalg 64, wobei gegebenenfalls auch eine andere Einrichtung genutzt werden kann. Der Luftbalg 64 ist über ein magnetisch bzw. elektrisch schaltbares Ventil 68 mit der Druckluftleitung 46 verbunden, welche ihrerseits unter Vermittlung des Hauptventils 20 mit dem Druckluftspeicher 14 in Verbindung steht. Außerdem umfasst die Lifteinrichtung L im vorliegenden Fall einen Drucksensor 66, über welchen ein Druck innerhalb des Luftbalgs 64 ermittelt werden kann. Weiterhin ist erkennbar, dass die Druckluftleitung 62 in Richtung des Ventils 56 zwischen dem Ventil 68 und dem Luftbalg 64 abzweigt.

Die Lifteinrichtung L mit deren zugehörigen Luftfedereinrichtung 52 der Liftachse LA funktioniert nun folgendermaßen:
Wird über die Luftfedersteuerung LFS über eine Steuerleitung 70 ein entsprechendes Signal gegeben, so schaltet das Ventil 68. Gleichzeitig wird über die Steuerleitung 48 das Hauptventil 20 geschaltet, sodass Druckluft über die Leitung 46 durch das Ventil 68 in den Luftbalg 64 gelangt. Durch die Druckbeaufschlagung des Luftbalgs 64 wird dabei erreicht, dass die zugehörige Liftachse LA angehoben wird.

Dabei ist es jedoch erforderlich, dass die Luftfedern 54 der Luftfedereinrichtung 52 der Liftachse LA entsprechend entlüftet werden, da ansonsten die Kraft des Luftbalgs 64 entgegen der Luftfedern 54 wirkt. Um dies zu erreichen, dient die Verbindung der Lifteinrichtung L mit der Luftfedereinrichtung 52 über die Druckluftleitung 62. Wird nämlich innerhalb der Luftfeder 64 und somit auf der Druckluftleitung 62 ein entsprechender Luftdruck erreicht, so erzeugt dieser über die Druckluftleitung 62 ein entsprechendes Schaltsignal auf das Ventil 56, welches bewirkt, dass dieses in Richtung nach rechts geschaltet wird. Durch Schalten des Ventils 56 wird wiederum erreicht, dass Luft aus dem Luftbalg 64 über die zugehörigen Leitungen 60 durch das Ventil 56 hindurch gelangen und von dort aus über eine Leitung 72 und ein Überdruckventil 74 bzw. über einen Schalldämpfer 76 ins Freie gelangen kann. Durch das Überdruckventil 74 wird dabei sichergestellt, dass ein Restdruck innerhalb der Luftfedern 54 verbleibt, sodass beispielsweise das Gummi der Bälge der Luftfedern 54 vor Beschädigungen geschützt ist. Somit ist die Liftachse LA angehoben und ein Restdruck innerhalb der Luftfedern 54 vorhanden. In diesem Zustand sind beide erforderlichen Ventile, nämlich das Hauptventil 20 und das Ventil 68, im stromlosen Zustand.

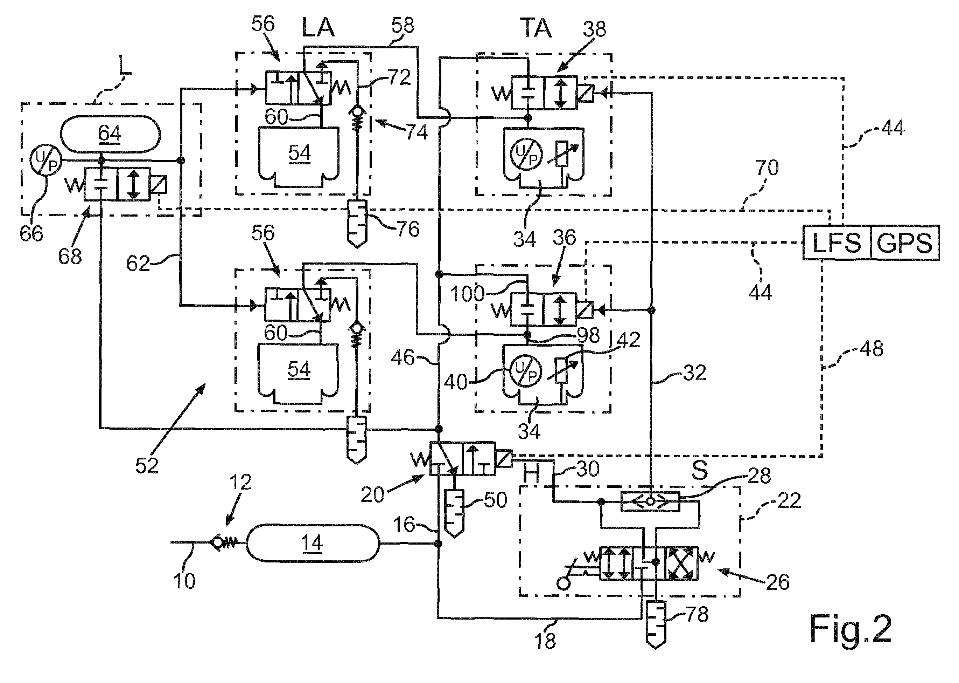

Um umgekehrt die Liftachse LA wieder zu senken, wird das Ventil 68 über die Luftfedersteuerung LFS geschaltet, wodurch Luft aus dem Luftbalg 64 über die Leitung 46, das Hauptventil 20 vom Schalldämpfer 50 ins Freie gelangt. Durch das Entleeren des Luftbalgs 64 fällt auch der Druck in der Steuerleitung 62 zum Ventil 56, wodurch dieses zurück in die in Fig. 1 Grundstellung gelangt. Dadurch entsteht wieder eine Verbindung zwischen den Luftfedern 64 bzw. deren Leitung 60 und der Versorgungsleitung 58, sodass durch entsprechendes Schalten des Hauptventils 20 und des Halteventils 38 die Luftfedern 64 belüftet werden können. In diesem Zusammenhang sei erwähnt, dass über das Halteventil 38 die Luftfedern 64 der Liftachse LA auch mit der Hebe- und Senkeinrichtung 22 gekoppelt sind. Die Luftfederanlage gemäß Fig. 2 ist im Wesentlichen analog bzw. identisch zu derjenigen gemäß Fig. 1 aufgebaut, sodass im Wesentlichen lediglich auf die Unterschiede eingegangen wird. So ist bei der Luftfederanlage gemäß Fig. 2 bei der Hebe- und Senkeinrichtung 22 auf den Druckminderer 24 verzichtet worden, wobei demgegenüber ein Schalldämpfer 78 vorgesehen ist.

Die beiden Halteventile 36, 38 sind vorliegend so aufgeteilt, dass eine Links-Rechts-Trennung der Luftfedern 34 erfolgt. In jeder Luftfeder 34 ist dabei ein Drucksensor 40 bzw. Höhensensor 42 zugeordnet.

Die Gestaltung der Liftachse LA unterscheidet sich im Wesentlichen dadurch, dass deren Luftfedereinrichtung 52 zwei Ventile 56 mit zugehörigen Schaltungskreisläufen aufweist, im Unterschied zu dem lediglich einen Ventil 56 gemäß Fig. 1. Hierdurch sind die beiden Luftfedern 54 ebenfalls getrennt voneinander schaltbar. Ansonsten erfolgt der Betrieb der Luftfederanlage hinsichtlich der Liftachse LA als auch der lediglich einen Tragachse TA analog zur Ausführung gemäß Fig. 1.

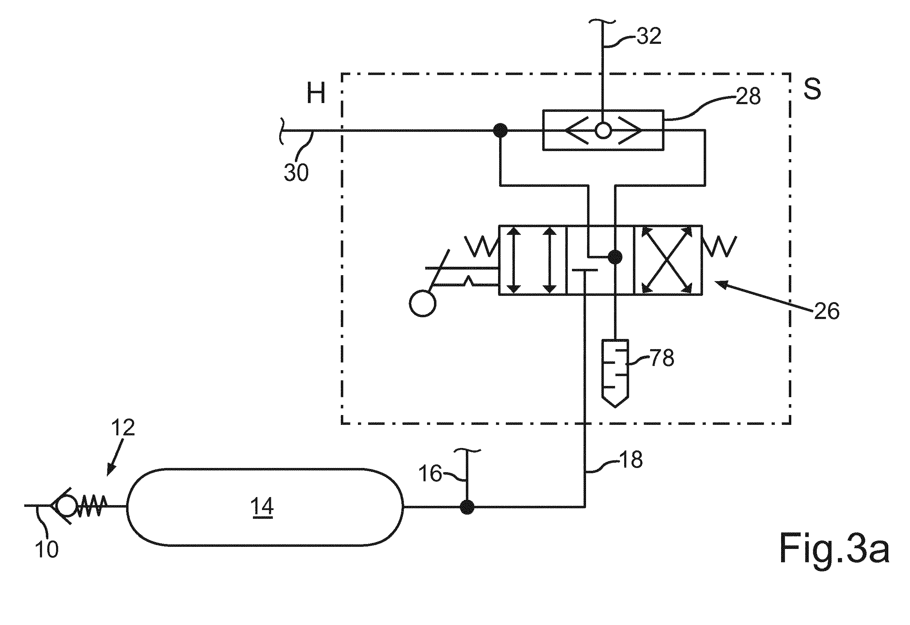

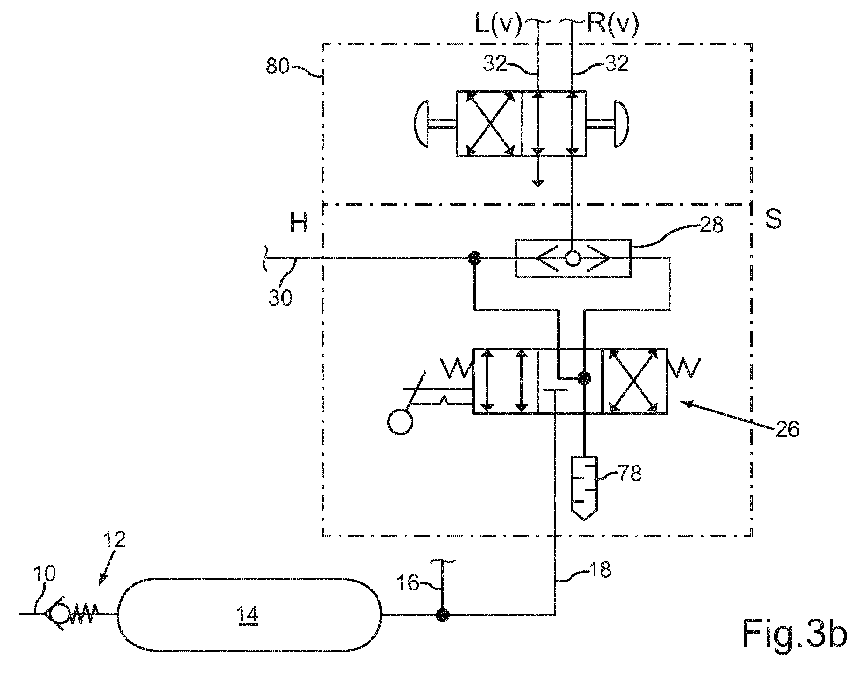

In Fig. 3 ist eine alternative Ausgestaltung der Hebe- und Senkeinrichtung 22 angedeutet. Diese Ausführungsform entspricht im Wesentlichen derjenigen gemäß Fig. 2.

Alternativ hierzu ist bei der Hebe- und Senkeinrichtung 22 gemäß Fig. 3b außerdem ein Handventil 80 dargestellt. Hierdurch ist es möglich, bei bestimmten Fahrzeugen, bei denen die vordere und hintere Tragachse TA1 bzw. TA2 unabhängig gesteuert werden soll, durch dieses als 4/2-Wegeventil gestaltete Handventil 80 eine entsprechende Umschaltmöglichkeit zu schaffen. So können beispielsweise die vordere oder hintere Tragachse TA1 bzw. TA2 oder aber die linke oder rechte Fahrzeugseite separat gehoben oder gesenkt werden.

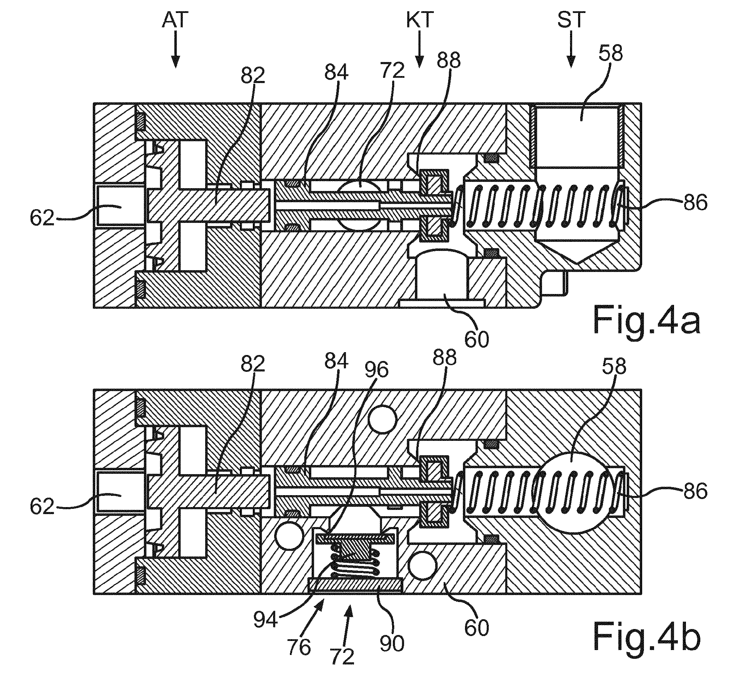

In den Fig. 4a und 4b ist in einer jeweiligen Schnittansicht ein 90° gedrehter Längsschnitt durch das Ventil 56 der Luftfedereinrichtung LE der Liftachse LA dargestellt. Eine Besonderheit besteht zunächst darin, dass das Ventil 56 im Wesentlichen dreiteilig gestaltet ist, umfassend einen Aktorteil AT, einen Kolbenteil KT und einen Schlussteil ST. Im Aktorteil AT ist dabei ein Einlass für die Druckluftleitung 62 vorgesehen, welche durch Zuführen von Druckluft ein Aktor 82 in Form eines Stößels axial bewegbar ist. Dieser Aktor 82 ist getrennt von einem Kolben 84 ausgebildet, welcher seinerseits druckausgeglichen ist, sodass dieser durch eine relativ geringe Kraft des Aktors 82 betätigt werden kann. Der Kolben 84 ist dabei mittels einer Feder 86 auf einem Ventilsitz 88 gehalten. In der hier gezeigten Stellung des Kolbens 84, in welcher dieser auf dem Ventilsitz 88 ruht, ist der Anschluss der Leitung 58 mit dem Anschluss der Leitung 60 verbunden. In dieser Stellung fungiert demzufolge die Liftachse LA gemäß Fig. 1 als normale Tragachse.

Wie insbesondere aus Fig. 4b erkennbar ist, umfasst das Ventil 56 zusätzlich im Kolbenteil KT einen Anschluss für die Druckluftleitung 72 gemäß den Fig. 1 bzw. 2. Wie überdies aus Fig. 4b erkennbar ist, ist in diesem Anschluss vorliegend das Überdruckventil 74 integriert. Dieses wird vorliegend eine beispielsweise über Bohrungen luftdurchlässige Stützscheibe 90, an welchem unter Vermittlung einer Feder 92 ein Dichtelement 94 gegen einen Ventilsitz 96 abgestützt ist. Durch geeignete Wahl der Feder 92 kann somit der Restdruck bestimmt werden, welcher innerhalb der jeweiligen Luftfeder 54 der Luftfedereinrichtung 52 der Liftachse LA verbleiben soll, wenn das Ventil 56 geschaltet und die Luftfedern 54 mittels der Luftfeder 64 der Lifteinrichtung L kombiniert werden. Auf Fig. 4b ist dabei insbesondere erkennbar, dass Luft vom Anschluss der Leitung 60 zum Anschluss der Leitung 72 überströmen kann, in der Kolben 84 vom Ventilsitz 88 abgehoben ist.

Fig. 5 zeigt in einer Schnittansicht eine mögliche Ausführung des Halteventils 36 bzw. 38 bzw. des Hauptventils 20. Im vorliegenden Fass handelt es sich um das Halteventil 36, welches oberseitig der zugehörigen Luftfeder 34 befestigt ist. Demzufolge weist das Ventil 36 einen Anschluss 98 auf, über welchen das Ventil 36 mit der Luftfeder 34 verbunden ist. Ein weiterer Anschluss 100 dient vorliegend zur Verbindung beispielsweise mit der Druckluftleitung 46 gemäß Fig. 1.

Auch im vorliegenden Fall ist erkennbar, dass das Ventil 36 im Wesentlichen dreiteilig gestaltet ist mit einem Aktorteil AT, einem Kolbenteil KT und einem Schlussteil ST. Im Aktorteil AT weist das Ventil 36 einen elektromagnetisch betätigbaren Aktor 102 auf, welcher durch entsprechende Schaltung mittels der zugehörigen Steuerleitung, beispielsweise der Leitung 44, betätigbar ist. Der Aktor 102 ist dabei lose mit einem Kolben 104 verbunden, welcher seinerseits über eine Feder 106 gegen einen Ventilsitz 108 abgestützt ist. Wiederum ist erkennbar, dass es sich auch vorliegend um ein druckentlastetes elektromagnetisches Schaltventil handelt.

Weiterhin ist erkennbar, dass der Drucksensor 40 und der Höhensensor 42 vorliegend in das Ventil 36 integriert sind.

Die Besonderheit des vorliegenden Ventils 36 liegt nun darin, dass dieses nicht nur elektromagnetisch mittels des Aktors 102 zu schalten ist, sondern außerdem einen Steueranschluss 110 beispielsweise für die Druckluftleitung 32 bzw. 30 aufweist, über welchen der Kolben 104 in Abhängigkeit eines in der Druckluftleitung 32 bzw. 30 vorherrschenden Luftdrucks schaltbar ist. Somit eignet sich das vorliegende Ventil 36 zum Einsatz bei der beschriebenen Hebe- und Senkeinrichtung 22, und zwar entweder als Halteventil 36 oder aber auch als Hauptventil 20.

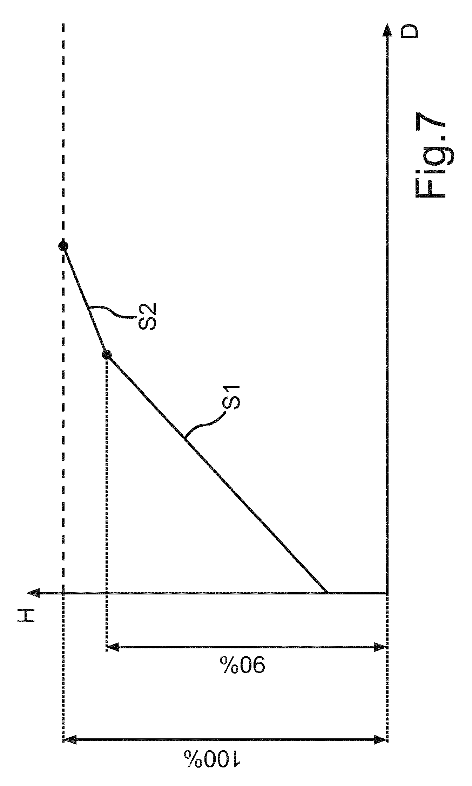

In Fig. 6 ist eine gegenüber Fig. 5 modifizierte Ausführungsform des Ventils 36 gezeigt. Als Aktor bzw. Betätigungsvorrichtung 112 ist im vorliegenden Fall ein Linearschrittmotor vorgesehen, welcher die im Zusammenhang mit Fig. 7 erläuterten Vorteile mit sich bringt. Auch dieser Linearschrittmotor ist über einen Stößel 114 mit dem zugehörigen Kolben nicht fest verbunden. Zwar kann der Kolben demzufolge mittels des Betätigungselements 112 vom Ventilsitz abgehoben werden, jedoch auch unabhängig vom Betätigungselement 112 bewegt werden. Insofern ist eine technisch gleiche Wirkungsweise wie beim Ventil 36 gegeben, bei welchem der Aktor 102 ebenfalls separat in dem Kolben 104 ausgebildet ist.

Die separate Ausgestaltung des Kolbens 104 vom Aktor 102 bzw. vom Betätigungselement 112 ist in erster Linie deshalb gegeben, weil laut der Ausführungsform gemäß Fig. 6 ein Steueranschluss 110 vorhanden ist, mittels welchem der Kolben 104 unabhängig von dem Betätigungselement 112 in Abhängigkeit eines in der Druckluftleitung vorherrschenden Luftdrucks geschaltet können werden soll. Insoweit gilt dies für beide Ausführungsformen des Ventils 36 gemäß den Fig. 5 und 6.

In Fig. 7 ist schließlich erkennbar weshalb sich ein Linearschrittmotor als Betätigungselement 112 besonders eignet.

Hierbei ist auf der y-Achse eine Höhe H abgetragen, um welche beispielsweise der Fahrzeugrahmen der jeweiligen Luftfederanlage angehoben werden soll. Auf der x-Achse ist im Verhältnis hierzu die Durchflussmenge D durch das Ventil 36 angegeben. Wie nun aus Fig. 7 erkennbar ist, weist ein Ventil 36 mit Linearschrittmotor 112 den Vorteil auf, dass ca. 90 % der Höhe H der jeweils zurückzulegenden Hebe- bzw. Senkbewegung mit großer Durchflussmenge erfolgen können, und eine Feineinstellung der letzten 10 % der Höhe mit einer geringeren Durchflussmenge. Ein Linearschrittmotor 112 ist dabei besonders günstig geeignet, um den Kolben 104 entsprechend so zu bewegen, dass sich unterschiedliche Durchflussmengen ergeben. Dies ist hingegen bei elektromagnetischen Lösungen ohne Weiteres möglich.

### Bezugszeichenliste:

- 10: Leitung
- 12: Rückschlagventils
- 14: Druckluftspeicher
- 16: Druckluftleitung
- 16: Leitung
- 18: Druckluftleitung
- 20: Hauptventil
- 22: Hebe- und Senkeinrichtung
- 24: Druckminderer
- 26: Handventil
- 28: Oder-Ventil
- 30: Leitung
- 32: Druckluftleitung
- 34: Luftfeder
- 36: Halteventil
- 38: Halteventil
- 40: Drucksensor
- 42: Höhensensor
- 44: Steuerleitung
- 46: Druckluftleitung
- 48: Steuerleitung
- 50: Schalldämpfer
- 52: Luftfedereinrichtung
- 54: Luftfeder
- 56: Ventil
- 58: Druckluftleitung
- 60: Leitung
- 62: Steuerleitung
- 64: Luftbalg
- 66: Drucksensor
- 68: Ventil
- 70: Steuerleitung
- 72: Druckluftleitung
- 74: Überdruckventil
- 76: Schalldämpfer
- 78: Schalldämpfer
- 80: Handventil
- 82: Aktor
- 84: Kolben
- 86: Feder
- 88: Ventilsitz
- 90: Stützscheibe
- 92: Feder
- 94: Dichtelement
- 96: Ventilsitz
- 98: Anschluss
- 100: Anschluss
- 102: Aktor
- 104: Kolben
- 106: Feder
- 108: Ventilsitz
- 110: Steueranschluss
- 112: Betätigungselement
- 114: Stößel
- TA1: Tragachse
- TA2: Tragachse
- LA: Liftachse
- L: Lifteinrichtung
- LFS: Luftfedersteuerung
- LE: Luftfedereinrichtung

## Patentansprüche

1. Luftfederanlage für ein Fahrzeug, insbesondere einen Anhänger, Sattelauflieger oder dgl., mit zumindest einer Luftfedereinrichtung (52) für eine Liftachse (LA), welche mittels einer pneumatisch betätigbaren Lifteinrichtung (L) anhebbar bzw. absenkbar ist,
**dadurch gekennzeichnet, dass**
die Luftfedereinrichtung (52) ein über eine Druckluftleitung (62) mit der Lifteinrichtung (L) verbundenes Ventil (68) umfasst, welches in Abhängigkeit eines in der Lifteinrichtung (L) vorherrschenden Luftdrucks schaltbar ist.

2. Luftfederanlage für ein Fahrzeug, insbesondere einen Anhänger, Sattelauflieger oder dgl., mit zumindest einer Luftfedereinrichtung (LE) für eine Tragachse (TA), welche wenigstens zwei Ventile (36, 38) für jeweils zugehörige Luftfedern (34) umfasst, mit einer pneumatischen Hebe- und Senkeinrichtung (22) zum Schalten wenigstens eines Hauptventils (20) und der wenigstens zwei Ventile (36, 38) der Luftfedereinrichtung (LE), welche als über eine Luftfedersteuerung (LFS) elektrisch schaltbare Ventile (36, 38) ausgebildet sind und welche mit der Hebe- und Senkeinrichtung (22) zur jeweiligen Schaltbetätigung über eine jeweilige Druckluftleitung (32) verbunden sind.

3. Luftfederanlage nach Anspruch 2,
**dadurch gekennzeichnet, dass**
die Hebe- und Senkeinrichtung (22) ein handbetätigbares Umschaltventil (26) umfasst.

4. Elektrisch schaltbares Ventil (56) für eine Luftfederanlage eines Fahrzeugs, insbesondere eines Anhängers, Sattelaufliegers oder dgl., mit einem elektrischen Betätigungselement (112), mittels welchem ein Kolben (104) zwischen einer Schließstellung und wenigstens einer Offenstellung betätigbar ist,
**dadurch gekennzeichnet, dass**
das Ventil (56) wenigstens einen Steueranschluss (110) für eine Druckluftleitung (58) aufweist, über welchen der Kolben (104) in Abhängigkeit eines in der Druckluftleitung (58) vorherrschenden Luftdrucks schaltbar ist.

5. Ventil (56) nach Anspruch 4,
**dadurch gekennzeichnet, dass**
ein Überdruckventil (74) in das Ventil integriert ist.

6. Elektrisch schaltbares Ventil (56) für eine Luftfederanlage eines Fahrzeugs, insbesondere eines Anhängers, Sattelaufliegers oder dgl., mit einem elektrischen Betätigungselement (112), mittels welchem ein Kolben (104) zwischen einer Schließstellung und wenigstens einer Offenstellung betätigbar ist, insbesondere nach Anspruch 3,
**dadurch gekennzeichnet, dass**
das elektrische Betätigungselement (112) als Linearschrittmotor ausgebildet ist.

7. Ventil (56) für eine Luftfedereinrichtung (52) einer Liftachse (L) eines Fahrzeugs, insbesondere eines Anhängers, Sattelaufliegers oder dgl., mit einem Kolben (104), der zwischen einer ersten Stellung und einer zweiten Stellung betätigbar ist, in welcher Druckluft zwischen zwei Anschlüssen (98, 100) des Ventils (56) strömt,
**dadurch gekennzeichnet, dass**
ein weiterer Anschluss für ein Überdruckventil (74) vorgesehen ist, über welches beim Ablassen von Druckluft aus der zugeordneten Luftfeder (64) der Luftfedereinrichtung (52) der Liftachse (L) ein Restdruck einstellbar ist.

8. Ventil (56) nach Anspruch 7,
**dadurch gekennzeichnet, dass**
das Überdruckventil (74) in das Ventil (56) integriert ist.
